# EUROPÄISCHE PATENTSCHRIFT

(11) **EP 0 641 685 B1**
(45) Veröffentlichungstag und Bekanntmachung des Hinweises auf die Patenterteilung: **22.07.1998**
(21) Anmeldenummer: 94113347.2
(22) Anmeldetag: 26.08.1994
(51) Int. Cl.: B60P 7/13, B65F 3/00

(54) **Vorrichtung zur Sicherung des Transportes von Behältnissen**
Device for securing the transport of containers
Dispositif pour assurer la sécurité du transport de récipients

(30) Priorität: 07.09.1993 DE 4330252
(43) Veröffentlichungstag der Anmeldung: 08.03.1995
(73) Patentinhaber: Riedel und Söhne oHG, D-47475 Kamp-Lintfort (DE)
(72) Erfinder: Riedel, Norbert, D-47495 Rheinberg (DE); Riedel, Ludger, D-46509 Xanten (DE)
(74) Vertreter: Funken, Josef, Dipl.-Ing.

(56) Entgegenhaltungen:
- EP-A- 0 550 056
- WO-A-92/06882
- DE-A- 2 232 319
- DE-C- 4 008 619
- DE-C- 4 303 349
- US-A- 5 056 752
- PATENT ABSTRACTS OF JAPAN vol. 13, no. 327 (M-854) 24. Juli 1989 & JP-A-01 109 138 (KYOKUTO KAIHATSU KOGYO) 26. April 1989

## Beschreibung

Die Erfindung betrifft eine Vorrichtung zum Sichern des Transportes wenigstens eines Behältnisses mit einem Lastfahrzeug gegen Verrutschen des Behältnisses auf dem Lastfahrzeug während der Fahrt, wobei mindestens zwei Stützen an einem Fahrzeugaufbau angebracht sind und sich in Fahrzeuglängsrichtung und/oder quer dazu und/oder schräg zur Fahrzeuglängsrichtung, daß heißt diagonal gegenüber stehen sowie zwischen sich das Behältnis aufnehmen und das Behältnis zwischen den Stützen gelagert ist.

In JP-A-01 109 138, welches den nächstliegenden Stand der Technik darstellt, ist ein Fahrzeug mit einem Kasten- bzw. Kofferaufbau dargestellt, wobei der Kofferaufbau einen Boden und eine mit Abstand von dem Boden angeordnete Decke aufweist. Zwischen dem Boden und der Decke sind vom Boden bis zur Decke durchgehende Stützen vorgesehen, die sowohl am Boden als auch an der Decke befestigt sind. An den Stützen sind Führungen vorgesehen, in denen eine Stange um einen bestimmten Betrag in der Höhe verschieblich geführt ist. Im unteren Bereich jeder Stütze sind im unteren und oberen Bereich Verriegelungsteile vorgesehen. Durch die Anordnung der Stützen in der Mitte in Längsrichtung des Fahrzeuges und an beiden Seiten in Längsrichtung des Fahrzeuges sind Buchten gebildet, in die auf Rollen gelagerte Kühlcontainer von der Seite des Fahrzeuges her hineingerollt werden. Die Kühlcontainer haben an ihrem unteren und ihrem oberen Ende Vorsprünge, hinter die die an der Stange angebrachten Verriegelungsnasen greifen, wenn sie sich in gleicher Höhe befinden. Dazu hat die Stange einen Handgriff, mit dem die Stange zusammen mit den beiden Verriegelungsnasen angehoben werden kann, wobei im angehobenen Zustand der Stange der Kühlbehälter in die für ihn vorgesehene Box hineingerollt werden kann, wobei anschließend die Stange wieder heruntergelassen wird, so daß die Verriegelungsnasen der Stange hinter die Verriegelungsvorsprünge der Container einrasten.

Das bedeutet, daß die Container auf Rollen nur von der Seite her in die vorgesehene Bucht gerollt werden können und auf dem Boden des Fahrzeuges stehen. Es sind somit zur Herstellung der Sicherung mechanisch zu bewegende Verriegelungseinheiten erforderlich. Die verwendeten Behältnisse müssen nach dem Einsetzen durch eine spezielle Mechanik verriegelt werden. Die Behältnisse stehen immer auf der Ladefläche. Die Fixierungseinheiten bestehen aus jeweils zwei Teilen. Eines davon befindet sich am Container, das andere am Fahrzeugaufbau.

Aus der DE-PS 40 08 619 ist eine Containerentsorgungsanordnung mit einem Mobilkran mit einer hydraulisch betätigbaren, an dem Mobilkran drehbeweglich aufgehängten Greifzange bekannt, die zwei gegenüberliegend angeordnete und hydraulisch gegeneinander verschiebbare Greifbacken aufweist, an denen Greifklauen vorgesehen sind. Bei dieser Containerentsorgungsanordnung sind viele untereinander gleiche Container vorgesehen, die gegenüberliegende, nach außen offene Klaueneingriffstaschen für die Greifklauen aufweisen. Als Container ist ein sich nach unten konisch verjüngender Behälter vorgesehen, an dessen oberem Ende ein Kragen mit senkrecht und parallel zueinander verlaufenden Wänden angebracht ist. Zum Manipulieren des Containers, also zu dessen Anheben, Kippen und Absenken sind im oberen Bereich des Containers nach außen hin offene Klaueneingriffstaschen vorgesehen, in die die Greifklauen der Greifbacken eingreifen.

Die in der bekannten Containerentsorgungsanordnung benutzten Container haben eine Höhe von 1 m sowie eine Breite von 1 m und eine Länge von 1,20 m, mithin also ein Volumen von etwa 1 m³. Das übliche maximale Füllgewicht dieser Container liegt bei etwa 2 t.

Am unteren Ende des Kragens ist ein am Container umlaufender Absatz vorgesehen, so daß der Container sowohl auf dem Boden stehen als auch oberhalb des Bodens auf dem umlaufenden Absatz gelagert werden kann.

Diese Container werden zum Transport auf einem Lastkraftwagen auf die Ladeplattform des Lastkraftwagens in zwei Reihen hintereinander gestellt und gegen seitliches Verrutschen mittels eines Gurtes oder dgl. festgezurrt, weil es nicht genügt, die Container lose auf der Plattform des Lastkraftwagens stehend zu transportieren, da die seitlichen Bordwände des Lastkraftwagens keine genügende Sicherheit gegen seitliches Verrutschen der Container bieten.

Das Festzurren der Container ist aufwendig und bietet nicht in jedem Falle die im Straßenverkehr erforderliche Sicherheit gegen seitliches Verrutschen der Container auf der Ladeplattform, da sich durch Unebenheiten der Straße und durch Querbeschleunigungen beim Fahren durch Kurven die Verzurrung eines Containers lockern bzw. lösen kann.

Aus der DE-OS 22 32 319 ist eine Vorrichtung zum Transportieren von Fließgutbehältern bekannt, bei der Fließgutbehälter gleicher oder unterschiedlicher Größe auf Lastfahrzeugen, insbesondere Containerfahrzeugen, zu einer Transporteinheit zusammengefaßt und durch Verankerungseinrichtungen festgehalten sind. Die Ladeplattform ist über Verriegelungselemente lösbar mit dem Chassis des Lastfahrzeuges verbunden. Dabei besteht die Ladeplattform aus einem Tragrahmen, der Querträger aufweist, deren Abstände untereinander der Seitenabmessung des kleinsten zu transportierenden Behälters entsprechen. Die Ecken der Ladeplattform sind mit Containereckbeschlägen versehen. Außerdem weist die Ladeplattform Taschen zur Aufnahme der Behälterfüße auf. Bei dieser bekannten Vorrichtung sind Verriegelungselemente vorgesehen, die für die Transportbehälter gemeinsam zu betätigen sind.

Der Erfindung liegt die Aufgabe zugrunde, eine Vorrichtung der einleitend genannten Art so weiterzubilden, daß ein oder mehrere als Container ausgebildete Behältnisse an der vorgesehenen Stelle bzw. den vorgesehenen Stellen auf der Vorrichtung von oben her abzusetzen sind und ein seitliches Verrutschen der Behältnisse bzw. Container in der Vorrichtung mit Sicherheit ausgeschlossen ist und die Behältnisse in ihrer vorgesehenen Position allein schon aufgrund ihres Gewichtes verbleiben.

Zur Lösung dieser Aufgabe ist erfindungsgemäß vorgesehen, daß
- die Stützen an einem Halterahmen angebracht sind,
- das Behältnis mittels eines Mobilkrans von oben her in den Halterahmen zwischen die Stützen einzusetzen und nur durch sein Gewicht in der gewünschten Position gehalten ist,
- das Behältnis als sich nach unten verjüngender Container mit einem Kragen im Bereich dessen oberen Endes ausgebildet ist und
- der Halterahmen mit der jeweiligen Transportfläche des Lastfahrzeuges zu Wasser, zu Lande oder in der Luft verbunden ist.

Auf diese Weise gelangt man zu einer Vorrichtung zur Sicherung des Transportes von Behältnissen mit einem Lastfahrzeug gegen Verrutschen der Behältnisse auf dem Lastfahrzeug während der Fahrt, mit dem Behältnisse sicher gegen Verrutschen transportiert werden könne, so daß als Lastfahrzeug auch ein Straßenlastfahrzeug in Frage kommen kann, das die im Straßenverkehr erforderliche Sicherheit aufweist.

Hinzu kommt, daß es zur Sicherung des Transportes von Behältnissen mit einem Lastfahrzeug gegen Verrutschen der Behältnisse auf dem Lastfahrzeug wahrend der Fahrt genügt, die Behältnisse mit einem Mobilkran von oben her in die für sie vorgesehenen Einlagerungsöffnungen hineinzusetzen, wobei die Behältnisse im leeren als auch im gefüllten Zustand in dieser Position allein schon aufgrund ihres Eigengewichtes bzw. des Gesamtgewichtes verbleiben. Es ist somit nicht erforderlich, irgendwelche Verriegelungseinrichtungen zu verwenden. Wegen der konischen Form der Behälter ist es möglich, im Leerzustand jeweils mehrere Behälter ineinander zu stapeln, ohne daß ein solcher Behälterstapel zu hoch wird, weil die Behälter wegen ihrer konischen Formgebung sich überlappend ineinandergreifen, jedenfalls nicht aufeinander stehen.

Eine lösbare Verbindung bedeutet, daß die Verbindung ohne weiteres und schnell lösbar und wiederherstellbar ist. Die unlösbare Verbindung bedeutet nicht, daß diese Verbindung nicht mit entsprechenden Werkzeugen demontiert werden könnte.

Der Halterahmen kann aus in Fahrzeuglängsrichtung und quer dazu verlaufenden Halteprofilen gebildet sein, die an den Stützen unter Bildung eines Rahmens für das in diesen einzusetzende Behältnis befestigt sind.

Es empfieht sich, daß die Stützen als Begrenzungsstützen ausgebildet sind. Die Begrenzungsstützen sind zweckmäßig flächig ausgebildet.

Als Stützen können die Bordwände des Lastfahrzeuges dienen.

Es können Querbalken auf den Bordwänden des Lastfahrzeuges auflegbar und daran befestigbar sein, zwischen denen die Behältnisse einzusetzen sind.

Desgleichen können Längsbalken, beispielsweise wenigstens ein Mittellängsbalken auf die Stirnwände des Lastfahrzeuges auflegbar und daran befestigbar sein.

Die Querbalken und die Längsbalken können mit ihren Enden die Bordwände und die Stirnwände übergreifen und somit ein gitterartiges Gebilde darstellen, in deren Öffnungen die Behältnisse einzusetzen sind.

In weiterer Ausgestaltung der Erfindung kann vorgesehen sein, daß das Behältnis in dem Zwischenbereich auf den Begrenzungsstützen auf einem an dem Behältnis befindlichen Auflager, beispielsweise Kragen hängend derart zu lagern ist, daß der Boden des Behältnisses den Boden des Fixierungsrahmens oder der Tragfläche bzw. der Ladefläche des Lastfahrzeuges soeben noch nicht berührt.

Entsprechend kann die Vorrichtung auch so ausgebildet sein, daß das Behältnis in dem Zwischenbereich auf dem Boden des Fixierungsrahmens oder der Tragefläche bzw. der Ladefläche des Lastfahrzeuges stehend derart zu lagern ist, daß ein an dem Behältnis befindlicher Kragen die Oberkanten der Begrenzungsstützen soeben noch nicht berührt.

Es können mehrere der die Zwischenbereiche bildenden Kammern nebeneinander und hintereinander vorgesehen sind.

Es empfiehlt sich, die Vorrichtung so auszubilden, daß der Abstand nebeneinanderstehender Begrenzungsstützen der Länge eines Behältnisses bzw. Containers unterhalb dessen Kragens zuzüglich eines erforderlichen Bewegungsspieles entspricht.

Entsprechend kann auch vorgesehen sein, daß der Abstand hintereinanderstehender Begrenzungsstützen der Breite eines Behältnisses bzw. Containers unterhalb dessen Kragens zuzüglich eines erforderlichen Bewegungsspieles entspricht.

Die der Erfindung zugrunde liegende Aufgabe wird auch dadurch gelöst, daß mit Abstand oberhalb der Tragefläche eines Straßenfahrzeuges ein gitterartiges Gerüst vorgesehen ist, das aus mehreren Querträgern, einem Mittellängsbalken und je einem Seitenbalken an beiden Längsseiten des Transportgerätes besteht und daß als Container ausgebildete Behältnisse in die Zwischenbereiche zwischen den Querträgern, dem Mittellängsbalken und den Seitenbalken einzusetzen sind.

Auf diese Weise gelangt man zu einer Vorrichtung, mit der mehrere gleiche Container aufgenommen werden können, und bei der sichergestellt ist, daß ein Verrutschen der Container quer zur Fahrtrich-tung als auch in bzw. gegen Fahrtrichtung ausgeschlossen ist. Dadurch wird die Sicherheit im Straßenverkehr erhöht bzw. der Transport der Container ohne zusätzliche Sicherungsvorkehrungen erst zulässig. Das Einsetzen der Container in die zugehörigen Zwischenbereiche des Gerüstes ist unproblematisch. Die in den Zwischenbereichen angeordneten Container sind gegen seitliches Verrutschen gesichert, so daß ein Verzurren der Container auf der Ladefläche des Lastkraftwagens nicht mehr erforderlich ist.

Zweckmäßig können am Untergestell Kufen vorgesehen sein, wobei auf den Kufen senkrecht nach oben gerichtete Stützen befestigt sind, auf denen das Gerüst gelagert ist. Dadurch ist eine stabile Lagerung des Gerüstes in ständig gleicher Höhe oberhalb der Kufen gegeben.

Es empfiehlt sich, die Container mit dem Kragen auf den Querträgern zu lagern. Die Container sind somit auf den Querträgern ohne Bodenberührung hängend gelagert, so daß das Transportgerät einen Boden bzw. eine Plattform nicht benötigt. Das führt gleichzeitig dazu, daß das Transportgerät wegen des Fehlens einer Plattform bzw. eines Bodens vergleichsweise leicht ist.

Zweckmäßig entspricht der Abstand benachbarter Querträger voneinander der Breite eines Containers unterhalb des Kragens zuzüglich eines erforderlichen Bewegungsspieles. Dadurch ist sichergestellt, daß die Container mittels eines Krans ohne Schwierigkeiten in die Zwischenbereiche zwischen zwei benachbarten Querträgern eingesetzt und von den Querträgern wieder abgehoben werden können. Gleichzeitig ist gewährleistet, daß die Container sicher auf den Querträgern lagern, ohne von den Querträgern herunterzufallen.

Es empfiehlt sich, daß oberhalb des Mittellängsbalkens in den Bereichen der Querträger Distanzierungsprofile vorgesehen sind.

Unterhalb der Längsträger können Sicherungsprofile vorgesehen sein.

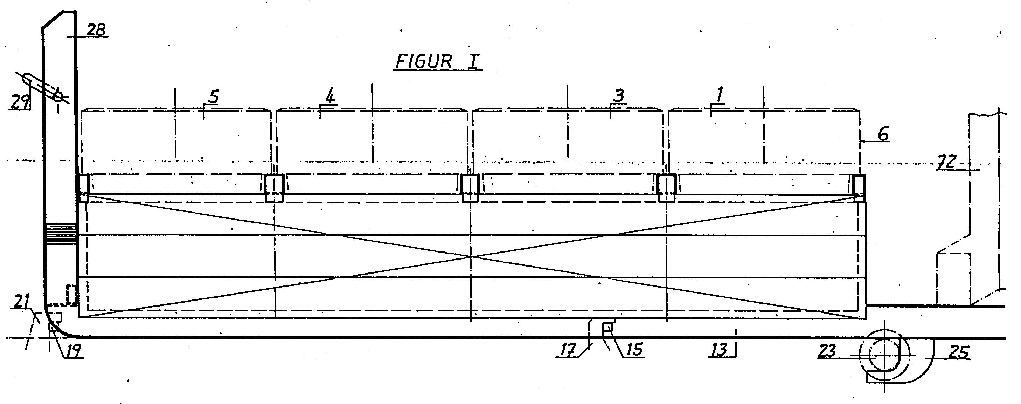

Die Erfindung wird nachfolgend anhand eines Ausführungsbeispieles des näheren erläutert. Es zeigt
- Fig. 1: eine Seitenansicht auf ein erfindungsgemäß ausgebildetes Transportgerät,

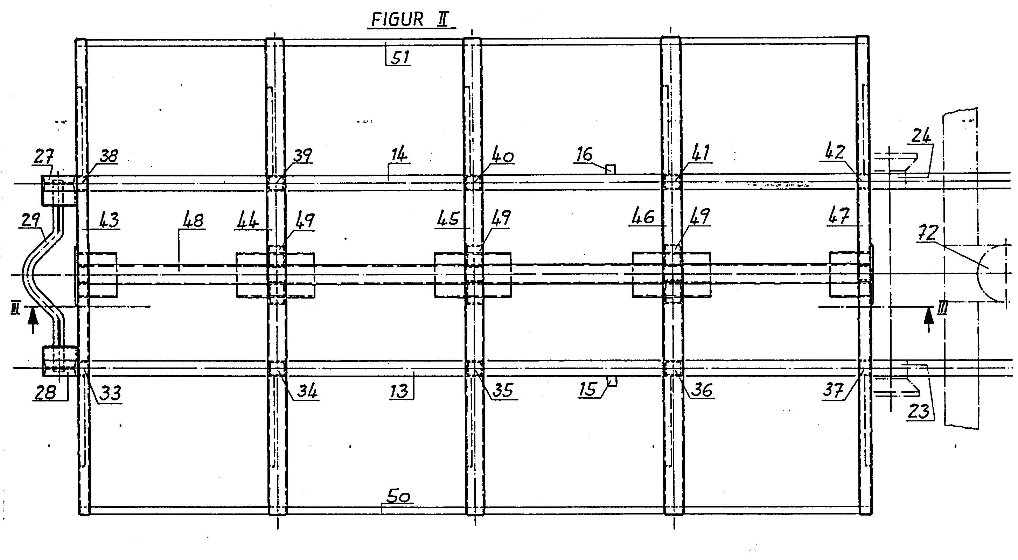

- Fig. 2: eine Draufsicht auf Figur 1,

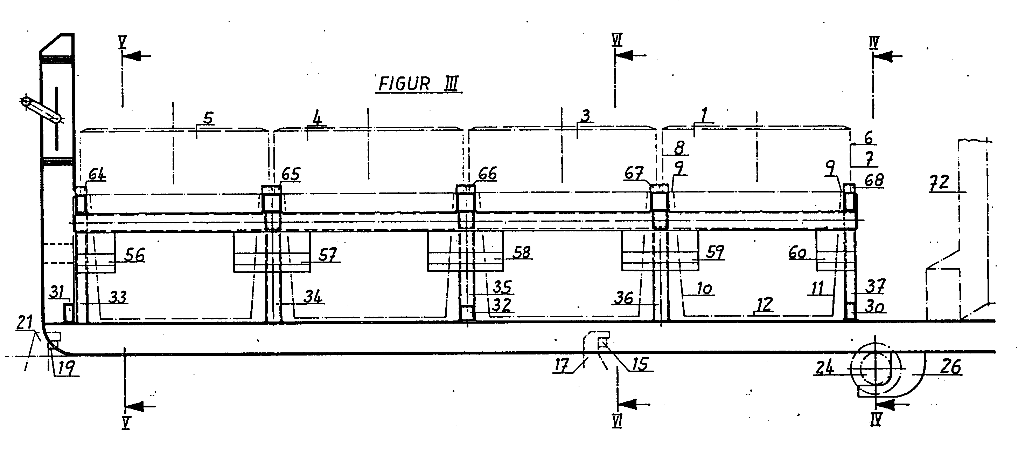

- Fig. 3: einen Schnitt längs der Linie III-III der Figur 2,

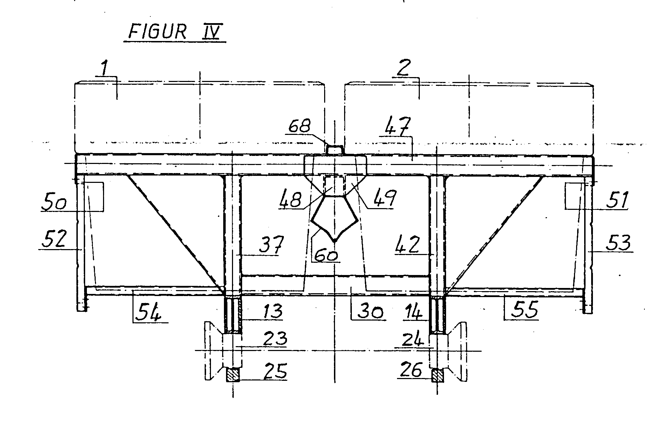

- Fig. 4: einen Schnitt längs der Linie IV-IV der Figur 3,

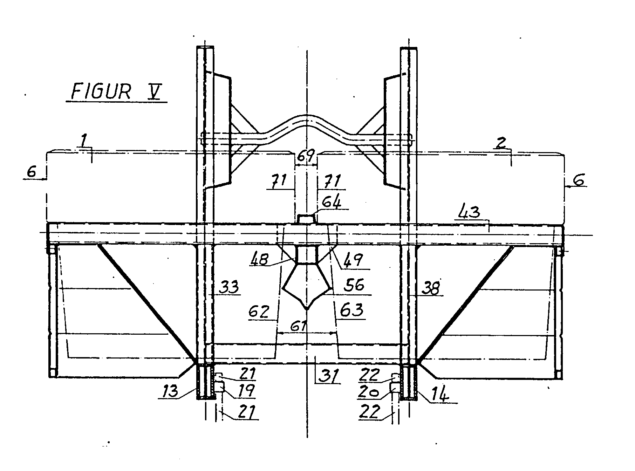

- Fig. 5: einen Schnitt längs der Linie V-V der Figur 3 und

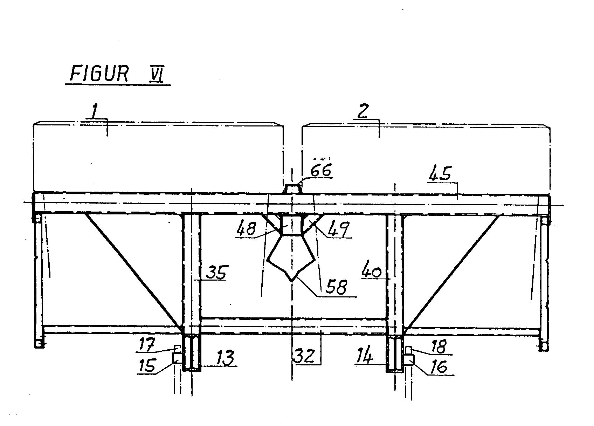

- Fig. 6: einen Schnitt längs der Linie VI-VI der Figur 3.

Das in der Zeichnung dargestellte Transportgerät dient zur Aufnahme mehrerer gleicher Container 1,2,3,4,5 für das getrennte Erfassen und Entsorgen von Reststoffen aus Bautätigkeit hinsichtlich der Zusammensetzung und der Qualität der die Reststoffe darstellenden Abfälle. Dabei besteht die Möglichkeit, die Abfälle so in unterschiedlichen Containern zu sammeln, daß hinsichtlich Sortenreinheit und Werthaltigkeit der Reststoffe unterschieden wird. Die Container 1,2,3,4,5 sind im Querschnitt rechteckig und haben am oberen Ende einen Kragen 6, der parallel zueinander verlaufende Wände 7,8 hat. Unterhalb des Kragens 6 ist ein umlaufender Absatz 9 gebildet, von dem aus die Wände 10,11 des Containers 1 sich nach unten konisch verjüngend bis um Boden 12 des Containers 1 verlaufen.

Das Transportgerät hat zwei parallel zueinander angeordnete Kufen 13,14, mit denen es auf einem Hilfsrahmen gelagert ist, der mit dem Chassis eines nicht näher dargestellten Lastkraftwagens verbunden ist. Mittels Bolzen 15,16 an den Kufen 13,14 sowie mittels Haken 17,18 an dem Hilfsrahmen und mit weiteren Bolzen 19,20 an den Kufen 13,14 sowie mit Haken 21,22 ist das Transportgerät am Hilfsrahmen lösbar verriegelt. Außerdem sind am Hilfsrahmen Rollen 23,24 vorgesehen, gegen die je ein Haken 25,26 des Transportgerätes anliegt.

Am vorderen Ende der Kufen 13,14 sind parallel zueinander angeordnete Holme 27,28 vorgesehen, die den gleichen Abstand voneinander aufweisen wie die Kufen 13,14. Zwischen den beiden Holmen 27,28 ist ein Bügel 29 vorgesehen, an dem das Transportgerät mit einem am Lastkraftwagen vorgesehenen Hakenlift auf den Lastwagen zu ziehen bzw. von diesem abzurollen ist.

Die Kufen 13,14 sind durch Profilstäbe 30,31,32 miteinander verbunden.

Auf der Kufe 13 sind senkrecht nach oben stehende Stützen 33,34,35,36,37 sowie auf der Kufe 14 ebenfalls senkrecht nach oben gerichtete Stützen 38,39,40,41,42 vorgesehen. Am oberen Ende der Stützen 33 bis 42 sind Querträger 43,44,45,46,47 befestigt, die sich über die gesamte Breite des Transportgerätes erstrecken.

Unterhalb der Querträger 43 bis 47 ist ein Mittellängsbalken 48 vorgesehen, der über Befestigungs- und Versteifungsbleche 49 mit jedem der Querträger verbunden ist.

An den jeweiligen äußeren Enden der Querträger 43 bis 47 sind Außenbalken 50,51 vorgesehen, an denen Bordwände 52,53 angeordnet sind, die jeweils über Distanzstäbe 54 und 55 von den Kufen 13,14 distanziert sind.

Der Abstand benachbarter Querträger 43 bis 47 voneinander entspricht der Länge eines Containers 1 unterhalb des Kragens 6 zuzüglich eines erforderlichen Bewegungsspieles, damit die Container 1,2,3,4,5 in die von den Querträgern 43 bis 47, dem Mittellängsbalken 48 und den Außenbalken 50,51 gebildeten Zwischenräume eingesetzt und aus diesen wieder herausgenommen werden können.

Die Container 1,2,3,4,5 sind mit den Absätzen 9 auf den Querträgern 43 bis 47 gelagert und haben nach unten hin Bodenfreiheit.

Unterhalb des Mittellängsbalkens 48 sind in den Bereichen der Querträger 43 bis 47 Sicherungsprofile 56,57,58,59,60 vorgesehen, die den Zwischenraum 61 zwischen den Wänden 62,63 zweier seitlich benachbarter Container weitgehend ausfüllen, damit die zwischen die Querträger 43 bis 47 einzusetzenden Behälter zunächst geführt werden und später, nachdem sie auf die Querträger 43 bis 47 abgestellt sind, einer Kippbewegung zur jeweiligen Außenkante des Lastkraftwagens entgegengewirkt wird. Mit diesen Sicherungsprofilen 56 bis 60 werden auch die gegebenenfalls gestapelten Container sicher in der gewünschten senkrechten Stellung gehalten.

Oberhalb des Mittellängsbalkens 48 sind in den Bereichen der Querträger 43 bis 47 Distanzierungsprofile 64,65,66,67,68 vorgesehen, die ebenfalls den Zwischenraum 69 zwischen den Wänden 70 und 71 der Kragen 6 zweier benachbarter Container 1,2 weitgehend ausfüllen, wodurch die Container zusätzlich in der gewünschten senkrechten und voneinander distanzierten Lage gehalten werden.

Am rückwärtigen Ende des Transportgerätes ist schematisch der untere Teil eines Mobilkrans 72 dargestellt, mit dem die Container 1,2,3,4,5 in das Transportgerät eingesetzt und aus diesem wieder herausgehoben werden.

### Bezugszeichenliste

- 1: Container
- 2: Container
- 3: Container
- 4: Container
- 5: Container
- 6: Kragen
- 7: Wand
- 8: Wand
- 9: Absatz
- 10: Wand
- 11: Wand
- 12: Boden
- 13: Kufe
- 14: Kufe
- 15: Bolzen
- 16: Bolzen
- 17: Haken
- 18: Haken
- 19: Bolzen
- 20: Bolzen
- 21: Haken
- 22: Haken
- 23: Rolle
- 24: Rolle
- 25: Haken
- 26: Haken
- 27: Holm
- 28: Holm
- 29: Bügel
- 30: Profilstab
- 31: Profilstab
- 32: Profilstab
- 33: Stütze
- 34: Stütze
- 35: Stütze
- 36: Stütze
- 37: Stütze
- 38: Stütze
- 39: Stütze
- 40: Stütze
- 41: Stütze
- 42: Stütze
- 43: Querträger
- 44: Querträger
- 45: Querträger
- 46: Querträger
- 47: Querträger
- 48: Mittellängsbalken
- 49: Versteifungsblech
- 50: Außenbalken
- 51: Außenbalken
- 52: Bordwand
- 53: Bordwand
- 54: Distanzstab
- 55: Distanzstab
- 56: Sicherungsprofil
- 57: Sicherungsprofil
- 58: Sicherungsprofil
- 59: Sicherungsprofil
- 60: Sicherungsprofil
- 61: Zwischenraum
- 62: Wand
- 63: Wand
- 64: Distanzierungsprofil
- 65: Distanzierungsprofil
- 66: Distanzierungsprofil
- 67: Distanzierungsprofil
- 68: Distanzierungsprofil
- 69: Zwischenraum
- 70: Wand
- 71: Wand
- 72: Mobilkran

## Patentansprüche

1. Vorrichtung zum Sichern des Transportes wenigstens eines Behältnisses (1,2,3,4,5) mit einem Lastfahrzeug gegen Verrutschen des Behältnisses (1,2,3,4,5) auf dem Lastfahrzeug während der Fahrt, wobei mindestens zwei Stützen (33 bis 42) an einem Fahrzeugaufbau angebracht sind und sich in Fahrzeuglängsrichtung und/oder quer dazu und/oder schräg zur Fahrzeuglängsrichtung, daß heißt diagonal gegenüber stehen sowie zwischen sich das Behältnis (1 bis 5) aufnehmen und das Behältnis (1 bis 5) zwischen den Stützen (33 bis 42) gelagert ist,
**dadurch gekennzeichnet**, daß
- die Stützen (33 bis 42) an einem Halterahmen angebracht sind,
- das Behältnis (1 bis 5) mittels eines Mobilkrans von oben her in den Halterahmen zwischen die Stützen einzusetzen und nur durch sein Gewicht in der gewünschten Position gehalten ist,
- das Behältnis als sich nach unten verjüngender Container mit einem Kragen im Bereich dessen oberen Endes ausgebildet ist und
- der Halterahmen mit der jeweiligen Transportfläche des Lastfahrzeuges zu Wasser, zu Lande oder in der Luft verbunden ist.

2. Vorrichtung nach Anspruch 1, dadurch gekennzeichnet, daß der Halterahmen aus in Fahrzeuglängsrichtung und quer dazu verlaufenden Halteprofilen (43 bis 48) gebildet ist, die an den Stützen (33 bis 42) unter Bildung eines Rahmens für das in diesen einzusetzende Behältnis befestigt sind.

3. Vorrichtung nach einem der vorhergehenden Ansprüche, dadurch gekennzeichnet, daß die Bordwände (52,53) des Lastfahrzeuges als Stützen dienen.

4. Vorrichtung nach einem der vorhergehenden Ansprüche, dadurch gekennzeichnet, daß auf die Bordwände (52,53) des Lastfahrzeuges Querbalken (43 bis 47) auflegbar und daran befestigbar sind, zwischen denen die Behältnisse (1 bis 5) einzusetzen sind.

5. Vorrichtung nach einem der vorhergehenden Ansprüche, dadurch gekennzeichnet, daß auf die Stirnwände des Lastfahrzeuges Längsbalken, beispielsweise wenigstens ein Mittellängsbalken (48) auflegbar und daran befestigbar sind bzw. ist.

6. Vorrichtung nach einem der vorhergehenden Ansprüche, dadurch gekennzeichnet, daß das Behältnis (1 bis 5) in dem Zwischenbereich auf den Begrenzungsstützen auf einem an dem Behältnis befindlichen Auflager, beispielsweise Kragen (6) hängend derart zu lagern ist, daß der Boden des Behältnisses (1 bis 5) den Boden des Fixierungsrahmens oder der Tragfläche bzw. der Ladefläche des Lastfahrzeuges soeben noch nicht berührt.

7. Vorrichtung nach einem der vorhergehenden Ansprüche, dadurch gekennzeichnet, daß das Behältnis (1 bis 5) in dem Zwischenbereich auf dem Boden des Fixierungsrahmens oder der Tragefläche bzw. der Ladefläche des Lastfahrzeuges stehend derart zu lagern ist, daß ein an dem Behältnis (1 bis 5) befindlicher Kragen (6) die Oberkanten der Begrenzungsstützen soeben noch nicht berührt.

8. Vorrichtung nach einem der vorhergehenden Ansprüche, dadurch gekennzeichnet, daß mit Abstand oberhalb der Tragefläche eines Straßenfahrzeuges ein gitterartiges Gerüst vorgesehen ist, das aus mehreren Querträgern (43 bis 47), einem Mittellängsbalken (48) und je einem Seitenbalken an beiden Längsseiten des Transportgerätes besteht und daß als Container (1 bis 5) ausgebildete Behältnisse (1 bis 5) in die Zwischenbereiche zwischen den Querträgern (43 bis 47), dem Mittellängsbalken (48) und den Seitenbalken einzusetzen sind.

9. Vorrichtung nach einem der vorhergehenden Ansprüche, dadurch gekennzeichnet, daß oberhalb des Mittellängsbalkens (48) in den Bereichen der Querträger (43 bis 47) Distanzierungsprofile (64 bis 68) vorgesehen sind.

10. Vorrichtung nach einem der vorhergehenden Ansprüche, dadurch gekennzeichnet, daß unterhalb der Längsträger Sicherungsprofile (56 bis 60) vorgesehen sind.

## Claims

1. Device for securing the transportation of at least one container (1, 2, 3, 4, 5) by goods vehicle against slippage of the container (1, 2, 3, 4, 5) on the goods vehicle during the journey, with at least two supports (33 to 42) being fitted to a superstructure on the vehicle and standing in the vehicle's longitudinal direction and/or cross-wise to it and/or oblique to it, i.e. diagonally opposite, and receiving the container (1 to 5) between them, and the container (1 to 5) being located between supports (33 to 42),
**characterized in that**
- the supports (33 to 42) are fitted on a holding frame,
- the container (1 to 5) is to be put in place in the holding frame between the supports from above, by means of a mobile crane, and is held in the desired position solely through its weight,
- the container is designed as a shipping container which tapers in a downwards direction, with a collar in the area of its upper end, and
- the holding frame is connected with the respective transport surface of the goods vehicle on water, on land or in the air.

2. Device in accordance with claim 1, characterized in that the holding frame is formed from holding profiles (43 to 48) which run in the vehicle's longitudinal direction and cross-wise to it, and which are fixed to the supports (33 to 42), to form a frame, for the container to be placed therein.

3. Device in accordance with one of the preceding claims, characterized in that the outer walls (52, 53) of the goods vehicle serve as supports.

4. Device in accordance with one of the preceding claims, characterized in that cross beams (43 to 47) can be placed on the outer walls (52, 53) of the goods vehicle and can be fixed to them, and that the containers (1 to 5) can be placed in between [the cross beams].

5. Device in accordance with one of the preceding claims, characterized in that longitudinal beams, for example at least one central longitudinal beam (48), can be placed on the end walls of the goods vehicle, and fixed on them.

6. Device in accordance with one of the preceding claims, characterized in that the container (1 to 5) is to be carried hanging in the intermediate area on the boundary supports by a bearing surface, for example a collar (6), located on the container, in such a way that the base of the container (1 to 5) is just clear of the floor of the fixing frame or of the bearing surface, or the loading area of the goods vehicle.

7. Device in accordance with one of the preceding claims, characterized in that the container (1 to 5) is to be stored standing in the intermediate area on the floor of the fixing frame or of the bearing surface or of the loading area of the goods vehicle, in such a way that a collar (6) located on the container (1 to 5) is just clear of the upper edges of the boundary supports.

8. Device in accordance with one of the preceding claims, characterized in that a grate-like cage is provided at a distance above the bearing surface of a road vehicle, this [frame] consisting of several cross-supports (43 to 47), a central longitudinal beam (48), and one side beam on each of the two longitudinal sides of the transport device, and that containers (1 to 5) designed as shipping containers (1 to 5) are to be used in the intermediate areas between the cross-supports (43 to 47), the central longitudinal beam (48), and the side beams.

9. Device in accordance with one of the preceding claims, characterized in that above the central longitudinal beam (48), spacing profiles (64 to 68) are provided in the areas of the cross-supports (43 to 47).

10. Device in accordance with one of the preceding claims, characterized in that below the longitudinal supports, securing profiles (56 to 60) are provided.

## Revendications

1. Dispositif pour sécuriser le transport d'au moins un récipient (1, 2, 3, 4, 5) avec un véhicule de transport de charges en empêchant ledit récipient (1, 2, 3, 4, 5) de glisser sur le véhicule de transport de charges au cours du trajet, au moins deux montants (33 à 42) étant montés sur la carrosserie du véhicule, se faisant face dans la direction longitudinale du véhicule et/ou transversalement à celle-ci et/ou en oblique par rapport à la direction longitudinale du véhicule, c'est-à-dire en diagonale, et recevant entre eux le récipient (1 à 5), et le récipient (1 à 5) étant logé entre les montants (33 à 42), caractérisé en ce que les montants (33 à 42) sont montés sur un cadre de retenue, en ce que le récipient (1 à 5) est prévu pour être mis en place dans le cadre de retenue, entre les montants, par le haut au moyen d'une grue mobile et n'est maintenu dans la position souhaitée que par son poids, en ce que le récipient est conçu sous la forme d'un conteneur rétréci vers le bas et muni d'une collerette dans la zone de son extrémité supérieure, et en ce que le cadre de retenue est relié à la surface de transport du véhicule de transport de charges par voie maritime, terrestre ou aérienne.

2. Dispositif selon la revendication 1, caractérisé en ce que le cadre de retenue est formé par des profilés de retenue (43 à 48) qui s'étendent dans la direction longitudinale du véhicule et transversalement à celle-ci et qui sont fixés aux montants (33 à 42) en formant un cadre pour le récipient qui doit y prendre place.

3. Dispositif selon une des revendications précédentes, caractérisé en ce que les parois latérales extérieures (52, 53) du véhicule de transport de charges servent de montants.

4. Dispositif selon une des revendications précédentes, caractérisé en ce que sur les parois latérales extérieures (52, 53) du véhicule de transport de charges peuvent être posées et fixées des traverses (43 à 47) entre lesquelles seront mis en place les récipients (1 à 5).

5. Dispositif selon une des revendications précédentes, caractérisé en ce que sur les parois latérales extérieures du véhicule de transport de charges peuvent être posés et fixés des longerons, par exemple au moins un longeron central (48).

6. Dispositif selon une des revendications précédentes, caractérisé en ce que le récipient (1 à 5) est prévu pour être disposé dans l'intervalle, sur les montants de délimitation, en y étant suspendu par un moyen d'appui, par exemple par une collerette (6), situé sur le récipient, de façon que le fond du récipient (1 à 5) ne touche pas le fond du cadre de blocage, de la surface porteuse ou de la surface de chargement du véhicule de transport de charges.

7. Dispositif selon une des revendications précédentes, caractérisé en ce que le récipient (1 à 5) est prévu pour être disposé dans l'intervalle en étant posé sur le fond du cadre de blocage, de la surface porteuse ou de la surface de chargement du véhicule de transport de charges, de façon qu'une collerette (6) située sur le récipient (1 à 5) ne touche pas les bords supérieurs des montants de délimitation.

8. Dispositif selon une des revendications précédentes, caractérisé en ce que, à distance au-dessus de la surface porteuse d'un véhicule routier, est prévue une structure en forme de grille qui est formée de plusieurs traverses (43 à 47), d'un longeron central (48) et d'un longeron latéral sur chacun des côtés longitudinaux de l'engin de transport, et en ce que les récipients (1 à 5) conçus sous la forme de conteneurs (1 à 5) sont prévus pour être mis en place dans les intervalles compris entre les traverses (43 à 47), le longeron central (48) et les longerons latéraux.

9. Dispositif selon une des revendications précédentes, caractérisé en ce que des profilés d'écartement (64 à 68) sont prévus au-dessus du longeron central (48) dans les zones des traverses (43 à 47).

10. Dispositif selon une des revendications précédentes, caractérisé en ce que des profilés de stabilisation (56 à 60) sont prévus au-dessous des longerons.
